(19) Europäisches Patentamt / European Patent Office / Office européen des brevets

(11) **EP 4 618 538 A1**

(12) **EUROPEAN PATENT APPLICATION**

(43) Date of publication:
**17.09.2025  Bulletin 2025/38**

(21) Application number: **24305395.6**

(22) Date of filing: **15.03.2024**

(51) International Patent Classification (IPC):
**H04N 19/119** *(2014.01)*    **H04N 19/176** *(2014.01)*

(52) Cooperative Patent Classification (CPC):
**H04N 19/176; H04N 19/119**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
• **BORDES, Philippe**
  **35890 LAILLE (FR)**
• **REUZE, Kevin**
  **35700 RENNES (FR)**
• **GALPIN, Franck**
  **35235 THORIGNE-FOUILLARD (FR)**
• **LE LEANNEC, Fabrice**
  **35830 BETTON (FR)**

(74) Representative: **Interdigital
Immeuble ZEN 2
845 A, avenue des Champs Blancs
35510 Cesson-Sévigné (FR)**

(54) **METHOD AND APPARATUS FOR ENCODING/DECODING**

(57)    In various implementations, method and devices are disclosed that encode or decode a block of a picture with a geometric partition that is responsive to a blending parametric function wherein the parameters of the blending parametric function are derived from samples of at least one of the first prediction or the second prediction; and wherein the sample-wise weighted blending of the first prediction and the second prediction is determined with a weight output from the blending parametric function responsive to the derived parameters applied to a sample location in the block.

FIG. 10

# EP 4 618 538 A1

**Description**

<u>TECHNICAL FIELD</u>

The present embodiments generally relate to a method and an apparatus for video encoding or decoding with geometric partitioning mode responsive to a blending parametric function.

<u>BACKGROUND</u>

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

<u>SUMMARY</u>

In various implementations, methods and devices are disclosed that that encode or decode a block of a picture with a geometric partition that is responsive to a blending parametric function wherein the parameters of the blending parametric function are derived from samples of at least one of the first prediction or the second prediction.
According to a first aspect, a method of video decoding is disclosed that comprises obtaining a first information indicating a splitting of a block of a picture with a geometric partition that is responsive to a blending parametric function of a sample location in the block; obtaining a first prediction of the block; obtaining a second prediction of the block; deriving parameters of the blending parametric function from samples of at least one of the first prediction or the second prediction; obtaining a third prediction of the block as a weighted blending of the first prediction and the second prediction wherein a weight of weighted blending is obtained from the blending parametric function responsive to the derived parameters applied to a sample location in the block; and decoding the block based on the third prediction of the block.
According to a second aspect, a method of video encoding is disclosed that comprises obtaining a first information indicating a splitting of a block of a picture with a geometric partition that is responsive to a blending parametric function of a sample location in the block; obtaining a first prediction of the block; obtaining a second prediction of the block; deriving parameters of the blending parametric function from samples of at least one of the first prediction or the second prediction; obtaining a third prediction of the block as a weighted blending of the first prediction and the second prediction wherein a weight of weighted blending is obtained from the blending parametric function responsive to the derived parameters applied to a sample location in the block; and encoding the block based on the third prediction of the block.
One or more embodiments also provide an apparatus for encoding/decoding video comprising one or more processors and at least one memory coupled to said one or more processors, wherein said one or more processors are configured to perform the encoding method according to any of the embodiments described herein.
One or more embodiments also provide a computer program comprising instructions which when executed by one or more processors cause the one or more processors to perform the encoding method according to any of the embodiments described herein. One or more of the present embodiments also provide a computer readable storage medium having stored thereon instructions for encoding or decoding a video according to the methods described herein.
One or more embodiments also provide a computer readable storage medium having stored thereon video data generated according to the methods described above. One or more embodiments also provide a method and apparatus for transmitting or receiving the video data generated according to the methods described herein.

<u>BRIEF DESCRIPTION OF THE DRAWINGS</u>

FIG. 1 illustrates a block diagram of a system within which aspects of the present embodiments may be implemented.

FIG. 2 illustrates a block diagram of an embodiment of a video encoder.

FIG. 3 illustrates a block diagram of an embodiment of a video decoder.

FIG. 4 illustrates an example of a geometric split line description and a blending parametric function.

FIG. 5 illustrates an example of a ramp function for the weights in geo-blending applied at splitting line.

FIG. 6a, 6b, 6c illustrate an example where a list of candidates may be built from the regular GEO list of candidates according to prior art.

FIG. 7 illustrate example inputs to the regression-based approach of the geo-blending according to prior art.

FIG. 8 illustrates a method for deriving blending function and template cost for each pair of inter candidates according to prior art.

FIG. 9 illustrates two predictions to which may apply a generic method for deriving a parametric function used in a "geo-blend" mode according to an embodiment.

FIG. 10, 11, 12 illustrate different variants of a generic method for deriving a parametric function from the prediction samples used in a geo-blending according to an embodiment.

## DETAILED DESCRIPTION

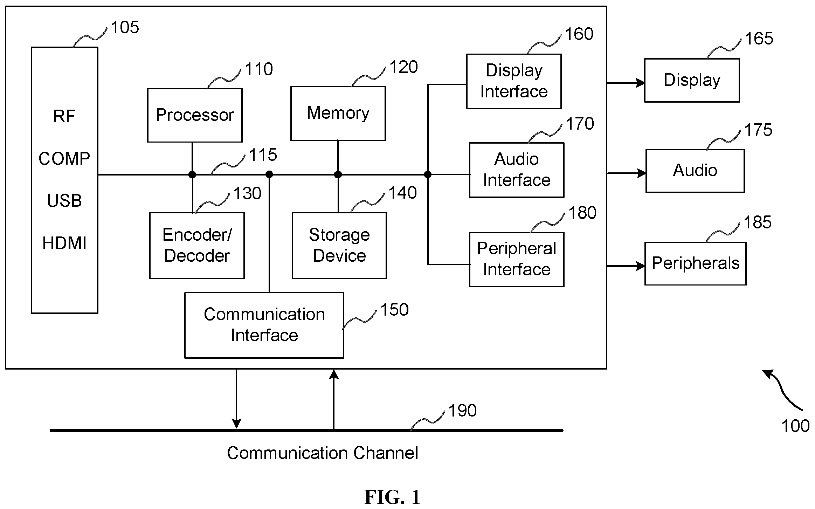

FIG. 1 illustrates a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In several embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or VVC.

The input to the elements of system 100 may be provided through various input devices as indicated in block 105.

Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/-decoder 130 operating in combination with the memory and storage elements to process the datastream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802. 11. The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105.

The system 100 may provide an output signal to various output devices, including a display 165, speakers 175, and other peripheral devices 185. The other peripheral devices 185 include, in various examples of embodiments, one or more of a stand-alone DVR, a disk player, a stereo system, a lighting system, and other devices that provide a function based on the output of the system 100. In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

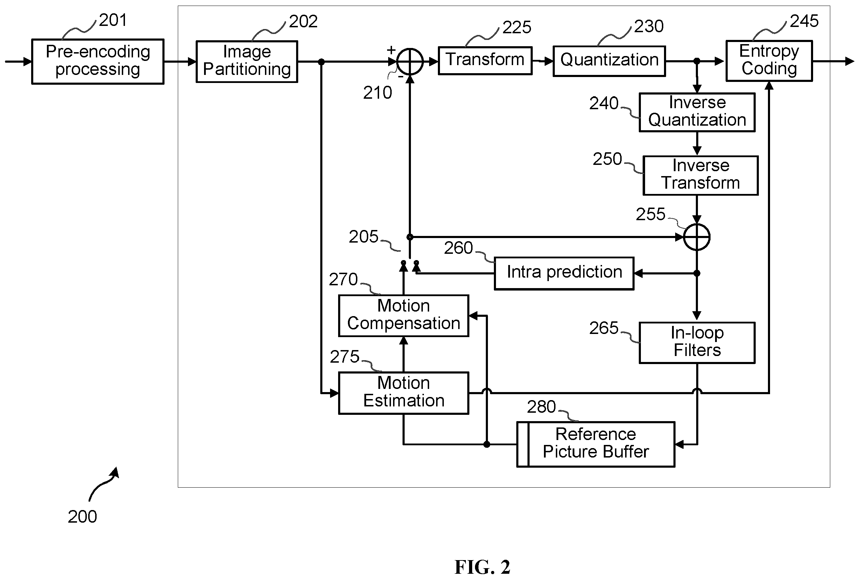

FIG. 2 illustrates an example video encoder 200, such as a VVC (Versatile Video Coding) encoder. FIG. 2 may also illustrate an encoder in which improvements are made to the VVC standard or an encoder employing technologies similar to VVC.

In the present application, the terms "reconstructed" and "decoded" may be used interchangeably, the terms "encoded" or "coded" may be used interchangeably, and the terms "image," "picture" and "frame" may be used interchangeably. Usually, but not necessarily, the term "reconstructed" is used at the encoder side while "decoded" is used at the decoder side.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression. Metadata can be associated with the pre-processing, and attached to the bitstream.

In the encoder 200, a picture is encoded by the encoder elements as described below. The picture to be encoded is partitioned (202) and processed in units of, for example, CUs. Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. After prediction, prediction enhancement (285) is applied to the prediction block. Prediction residuals are calculated, for example, by subtracting (210) the predicted block from the original image block.

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset) or linear (ex: Wiener adaptive linear filter, ALF) filtering to reduce encoding artifacts. The filtered image is stored at a reference picture buffer (280).

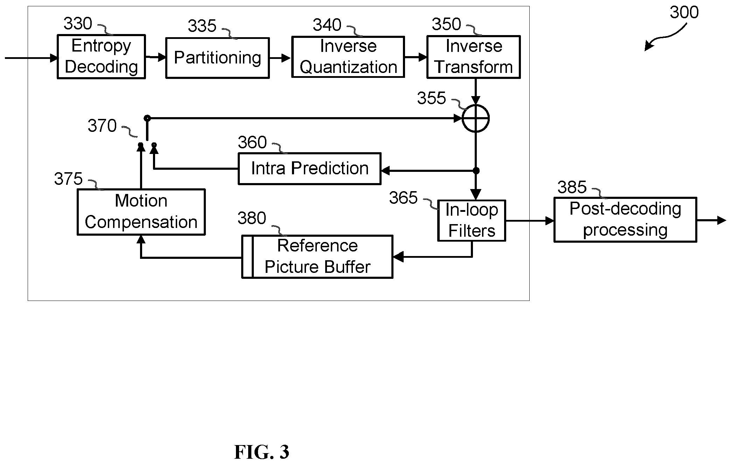

FIG. 3 illustrates a block diagram of an example video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block can be obtained (370) from intra prediction (360) or motion-compensated prediction (i.e., inter prediction) (375). After prediction, prediction enhancement (390) is applied to the prediction block. In-loop filters (365) are applied to the reconstructed image. The filtered image is stored at a reference picture buffer (380).

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

In VVC, a geometric partitioning mode (a.k.a GEO or GPM) is supported for inter prediction. In VVC, the geometric partitioning mode is signaled using a CU-level flag as one type of merge mode, with other merge modes. However, the geometric partitioning mode may be signaled independently from a merge mode, as another prediction mode. When the GEO mode is used, a CU is split into two parts by a geometrically located straight line.

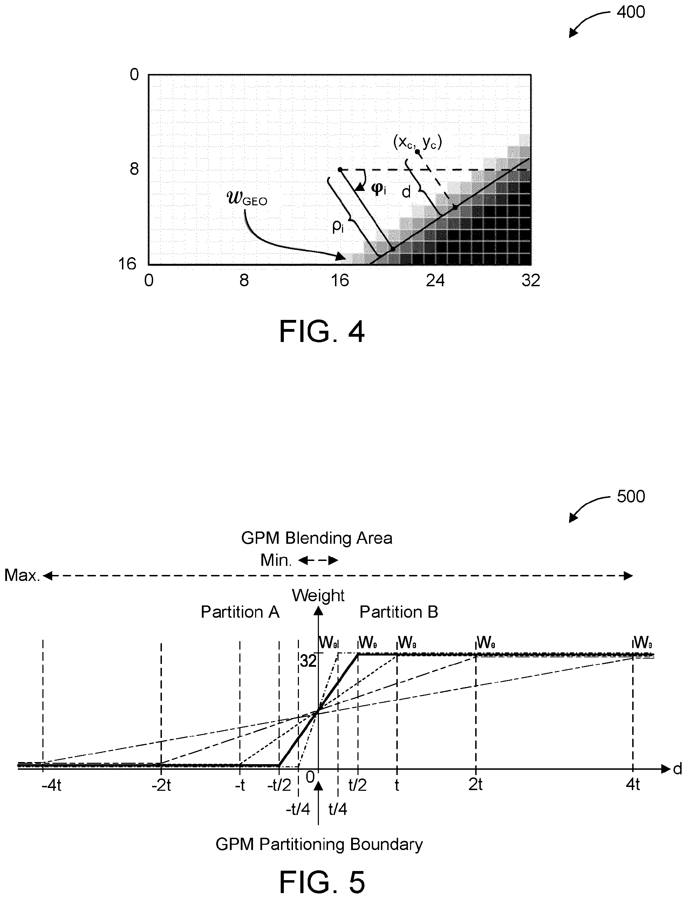

FIG. 4 illustrates an example of a geometric split line description and of a blending parametric function. The location of the splitting line is mathematically derived from an angle and offset parameters of a specific partition of a CU 400. For instance, a geometric split may be defined with an index which implicitly corresponds to angle $\varphi_i$ and distance $\rho_i$ as shown in FIG. 4. Each part of a geometric partition in the CU is inter-predicted using its own motion. In VVC, uni-prediction only is allowed for each partition.

Recent additions to video compression technology include various industry standards, versions of the reference software and/or documentations such as Enhanced Compression Model (ECM) being developed by the JVET (Joint Video Exploration Team) group. The aim is to make further improvements to the existing VVC (Versatile Video Coding) standard.

In ECM, a geometric partitioning mode is also supported for inter prediction. Besides, in ECM, bi-prediction is allowed for GEO and affine prediction has been proposed too. In yet other variant, one partition may be predicted with intra prediction. Each inter-prediction part has motion vector(s) and reference index(es).

According to yet another feature introduced in ECM, the blending area (predicted samples in the neighborhood of the splitting line) corresponding to a ramp strength may be selected among 5 values ($\iota$/4, $\iota$/2, $\iota$, 2$\iota$, 4$\iota$). FIG. 5 illustrates an example of a ramp function for the weights in GEO blending.

According to yet another feature of GEO, spatially varying weights for the current bi-predicted block are derived using regression-based method from template TM samples. In the following, this method is called "geo-blend" or "geo-blending" mode/method. It provides a spatially varying bi-prediction weight function w(x,y) for each sample located at position (x,y) in the current block. w(x,y) is defined as a parametric function that depends on parameters PAR estimated from template TM samples. The weight function w(x,y) may also be referred to as a blending parametric function as the resulting weight w(x,y) is used to blend the first and second prediction at the sample location (x,y) in the block. For example, the parametric function may be affine linear and is defined as follows, with parameters PAR = {$a_0$, $a_1$, b}.

$$w(x, y) = a_0. x + a_1. y + b \quad (1)$$

According to another feature, the weight function w(x,y) may be clipped in the interval [0,1].

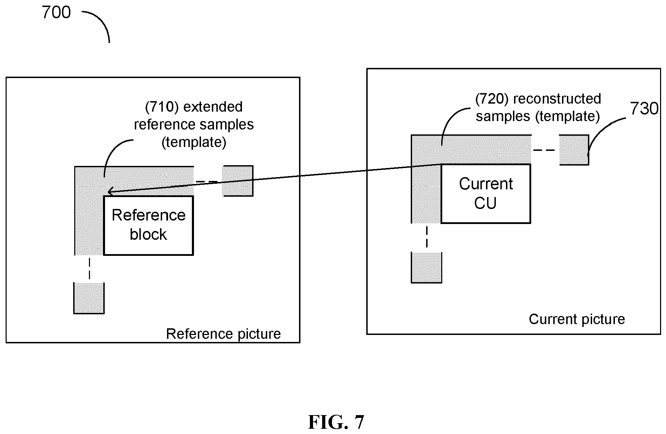

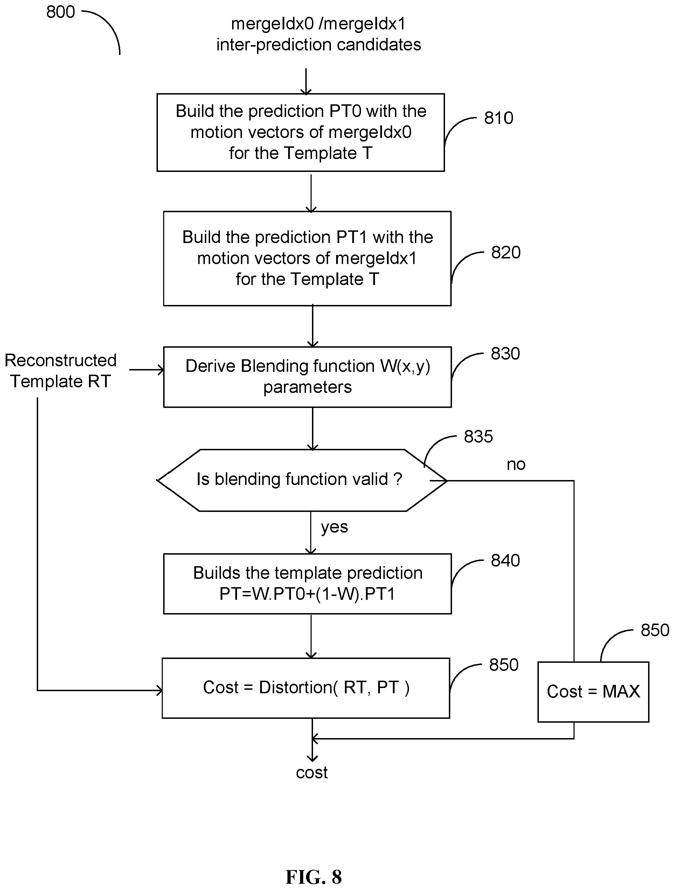

FIG. 8 illustrates a method 800 for deriving blending function and template cost for each pair of inter candidates. FIG. 7 illustrates example inputs to the regression-based approach.

In a first step 810, for the candidate identified with mergeIdx0, a prediction PT0 (710) of the template T is obtained with the motion vectors of mergeIdx0. As previously mentioned, the prediction PT0 may be any of an uni- or a bi-prediction. Besides, the template may be extended along vertical or horizontal lines. Similarly, in another step 820, the prediction PT1 of the template T is obtained with the motion vectors of mergeIdx1. In another step, not shown on FIG. 8, the reconstructed template RT (720) is accessed.

Accordingly, the inputs to the regression-based process 830 to derive the blending function w(x,y) parameters PAR = {$a_0$, $a_1$, b} are:

- The two extended uni- or bi- predictions $PT_{i=0,1}$ (motion compensation of the extended template of the reference block) (810,820, and 710 on FIG. 7)
- The reconstructed samples of the template (720 on FIG. 7).

The regression aims at minimizing a distance (for instance Mean-Square-Error with the Least Square Method LSM) between reconstructed samples of the template RT (720) and the weighted prediction samples of the template $PT_{i=0,1}$ derived from the two uni- or bi-predictions $PT_i$ templates (710). The output of the regression-based process are the parameters PAR minimizing the error of the bi-prediction with respect to the target (the original block samples RT(x,y) in the TM), where the weighted bi-prediction sample at position (x,y) is obtained as follows:

$$P_{bi-pred}(x, y) = \left(1 - w(x, y)\right) \times PT_0(x, y) + \left(w(x, y)\right) \times PT_1(x, y) \quad (3)$$

$$PAR = \arg \min_{(x,y) \epsilon TM} \left( RT(x, y) - P_{bi-pred}(x, y) \right)^2 \quad (4)$$

According to a non-limiting example, the reconstructed template (720) is made of reconstructed samples adjacent above and adjacent left to the current block. In a variant, the template may be extended above-right (730) and left-bottom with additional samples, the extension length may be a relative proportion of the current block size (ex: width extension equal to half of the current block width) as illustrated in FIG. 7. According to different variants, the number of lines and columns of the template may be one line/column or more than one lines/columns.

In another variant, the bias parameter {b} is set to zero, and thus is not part of the regression process.

In another variant, in case of affine linear model, the coefficients $a_{i=0,1}$ and b are found using a LSM with adding some constraints: for example, the weights deduced for a particular position should be inside an interval. For instance, the interval is [-2/8;10/8]. For example, the weights of any position should be inside the interval [0;1]. The equation (4) is solved using constrained Least Square Method. The values of the weights may be clipped to be in the desired interval. In a variant, the weighted function may be not valid (835) if the number of samples positions (x,y) with weights out of the interval is above a threshold, or if some/the samples at the CU corner have invalid (out of range) values. If the weight function is not valid, the corresponding candidate is discarded.

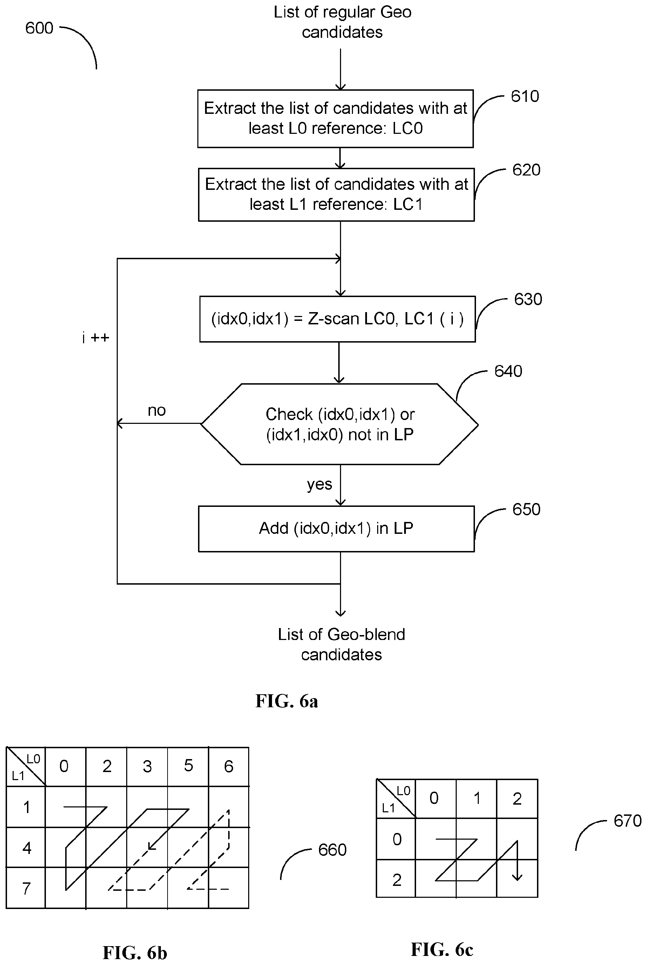

The regression process 830 may be applied for a set of inter-prediction candidates. The coding cost computed in 850 as the SAD of the "geo-blend" prediction and the reconstructed samples of the template may be used to re-order the list of valid (835) inter candidates as depicted in FIG. 6a.

FIG. 6a illustrate an example where a list of candidates for "geo-blend" mode may be built from the regular GEO list of candidates. The list of pair of inter candidates may be built so that the first partition uses at least one candidate from L0 and the second partition uses at least one candidate from L1. One may scan the list of candidates with at least one reference is L0 (610) and the list of candidates with at least one reference is L1 (620) in raster scan or Z-scan (630) as depicted in FIG. 6b or FIG. 6c for different number of candidates in the list.

In current development of ECM, the blending function parameters are derived with the samples of the reference templates and the reconstructed samples of the current CU template TM. However, using the reconstructed samples of the current template introduces block dependency, since the neighboring blocks should have been reconstructed before. This may jeopardize the performance of "geo-blend" compared to other coding modes that do not have such dependency.

The present document proposes a method for deriving the blending function parameters of the "geo-blend" mode from the samples of the P0 and P1 predictions, and advantageously without using the samples in the reference template and current template as presented above.

In a first embodiment, the parametric function is derived using one prediction (P0 or P1) as a prediction target PT.

In a second embodiment, the parametric function is derived from at least one prediction built as a function g() of the predictions P0 and/or P 1.

In a third embodiment, the parametric function is derived from a target weighting map derived from the predictions (P0 or P1).

In a fourth embodiment, the present principles are applied to a generalization of the parametric function to higher linear order.

## A generic embodiment for deriving a parametric function from the prediction samples used in a "geo-blend" mode.

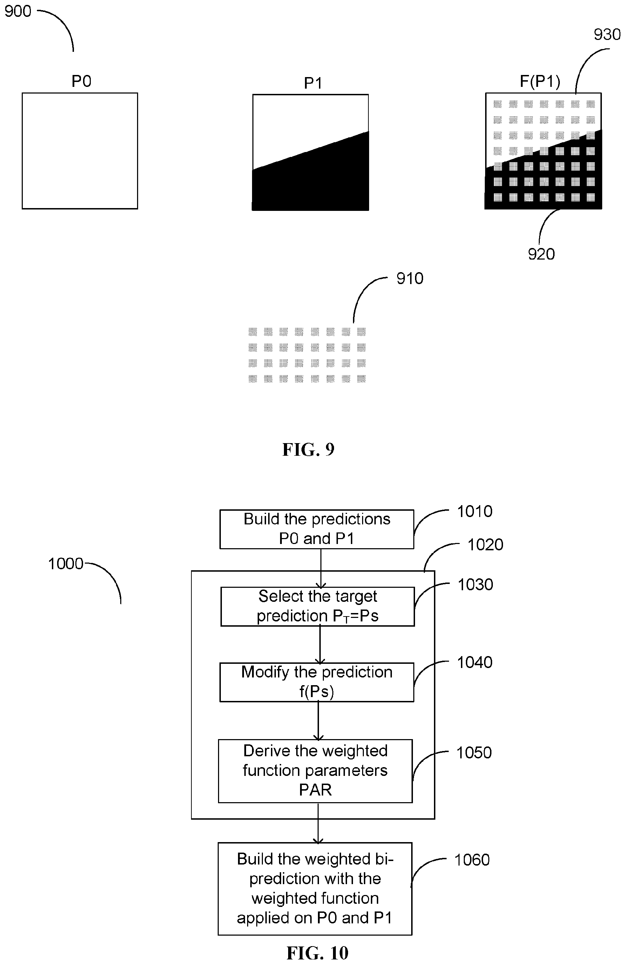

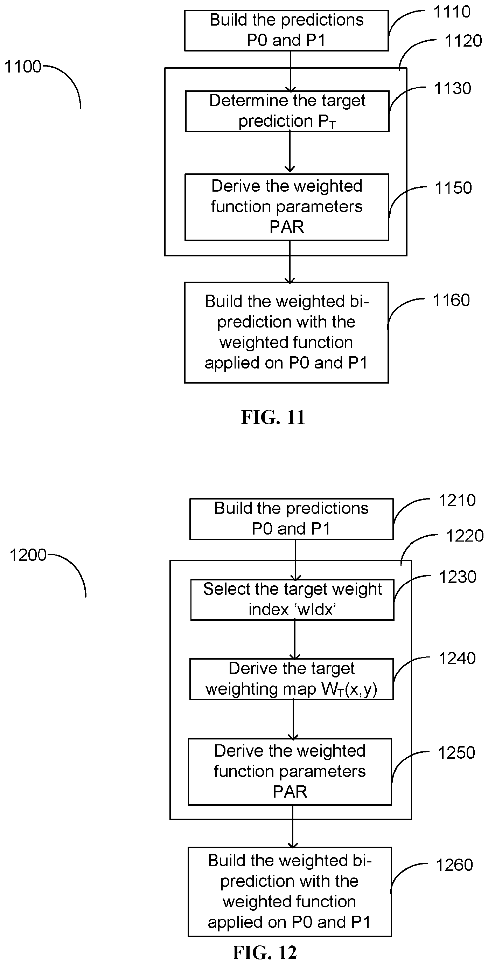

FIG. 10, 11, 12 illustrate different variants of a generic method for deriving a parametric function from the prediction samples used in a "geo-blend" mode according to an embodiment. The method 1000 of FIG. 10, 1100 of FIG. 11 or 1200 of FIG. 12 may be implemented in an encoder of FIG. 2 or a decoder of FIG. 3. The method may obtain a first information (geo-blend mode) indicating a splitting of a block of a picture with a geometric partition that is responsive to a blending parametric function ($w(x,y)$) of a sample location in the block. For instance, in a decoder, the method may obtain a first information (geo-blend mode) from a syntax element encoded in the bitstream. For instance, in an encoder, the method may determine that a block is to be encoded with geo-blend mode, for example based on RD cost, the information is then signaled to a decoder for instance as a syntax element in the bitstream. In a step (1010, 1110, 1210) a first prediction P0 of the block is obtained for a fist candidate mergeIdx0, similarly a second prediction P1 of the block is obtained for a second candidate mergeIdx1. In different variant, the prediction P0 or P1 may be any of an uni- or a bi-prediction, translational or affine. In another variant, at least one prediction may be intra prediction. In a next step (1020, 1120, 1220), parameters PAR of the blending parametric function $w(x,y)$ are derived from the samples of at least one of the first prediction or the second prediction as described hereafter according to various exemplary embodiments. Then, in a step (1060, 1160, 1260), a weighted bi-prediction of the block, ie a blending of first and second prediction according to a geometric partition, is computed as a weighted blending of the first prediction and the second prediction wherein a weight of weighted blending is obtained from the blending parametric function responsive to the derived parameters applied to a sample location in the block. Such blending provides a spatially varying bi-prediction weight function $w(x,y)$ for each sample located at position $(x,y)$ in the current block. A sample of the weighted average is obtained by applying a first weight $(1-w(x,y))$ to a sample at a location $(x,y)$ of the first prediction $P_0$ and by applying a second weight $w(x,y)$ to a co-located sample $(x,y)$ of the second prediction $P_1$.

$$P_{bi-pred}(x,y) = \big(1 - w(x,y)\big) \times P_0(x,y) + \big(w(x,y)\big) \times P_1(x,y) \qquad (5)$$

## A first variant embodiment for deriving a parametric function using one prediction ($P_0$ or $P_1$) as a target prediction.

FIG. 9 illustrates two predictions to which may apply a generic method for deriving a parametric function used in a "geo-blend" mode according to an embodiment. The blending function aims at partitioning the current block into 2 parts 920 930, one part 930 mainly predicted with $P_0$ samples and the other 920 mainly predicted with $P_1$ samples. A salient idea in the present principles is the assumption that the geometric partition is present in one of the 2 predictions. Thus, at least within one part, the prediction $P_0$ (or $P_1$) is not good to predict the current block. For instance, according to the example of FIG.9, the partition may be induced from P1. Thus, $P_0$ may not be a good predictor for the black region (920) but a good predictor for the white region (930) in combination or not with $P_1$. For example, the resulting weights for $P_0$, $P_1$ may

respectively be (1, 0) for 930 and (0,1) for 920. Or for example, the resulting weights for $P_0$, $P_1$ may respectively be (1/2, 1/2) for 930 and (0,1) for 920.

According to the first variant embodiment, a target prediction $P_T$ is selected among the first prediction $P_0$ or second prediction $P_1$. However, if $P_1$ is used as the target prediction $P_T$ ($P_T=P_1$) for deriving the blending function parameters in the regression process, one will obtain parameters PAR corresponding to w(x,y)=1 (for example PAR ={$a_0$, $a_1$, b} = {0,0,1} in case of an affine linear model for the weights), that is predicting with $P_1$ only.

FIG. 10 illustrates a first variant embodiment of a generic method for deriving a parametric function from the prediction samples used in a "geo-blend" mode. Advantageously, according to a particular feature, the blending function is derived from a selected (1030) prediction $P_s$ (s=0 or 1) used as target T ($P_T=P_s$) rather than using the templates. Besides, the prediction $P_s$ is replaced by f($P_s$) (1040) in the blending prediction equation, where f() is a function that will modify $P_s$ in a way that f($P_s$) is still good for predicting one part, but less good than the other prediction for predicting the other part. Then the regression process of equation (4) is modified as follows in equation (6) (1040):

$$\text{PAR} = \arg \min_{(x,y)\epsilon B} \left( P_T(x,y) - P'_{bi-pred}(x,y) \right)^2 \qquad (6)$$

Where $P'_{bi-pred}$ (x,y) is given by (example where s=1):

$$P'_{bi-pred}(x,y) = \left(1 - w(x,y)\right) \times P_0(x,y) + \left(w(x,y)\right) \times f(P_1(x,y)) \qquad (7)$$

According to different variants, f() is a function which adds a random noise or a pre-determined pattern signal to the prediction samples $P_s$. Fig 9. illustrates an example of pre-determined pattern signal 910. The added signal amplitude should be high enough so that f($P_s$) is still good for predicting one part, but less good than the other prediction for predicting the other part. The amplitude may be derived from the signal characteristics of $P_0$ or $P_1$, such as the standard deviation, the min/max range of the prediction(s) sample values according to non-limiting examples.

Once the parameters PAR have been derived, a weighting map is computed with PAR according to equation (1) in a step 1060 as well as the regular weighted bi-prediction $P_{bi-pred}$ (x, y) is computed according to equation (5) and used to reconstruct the block as usual.

In a variant, the prediction target index "s" used for the target for deriving the parameters PAR is signaled in the bitstream for the current block. It may be signaled at the CU level when the geo-blend mode is selected.

In a variant, the selected prediction used as target in equation (6) in step 1030 may be arbitrary selected as 0 or 1. In other variants, the selected prediction is the one built from the reference picture coded with lowest quantization parameter QP value or lowest temporal Id value or with the closest POC to the current picture POC.

### A second variant embodiment for deriving a parametric function using a target prediction as a function of the first and second prediction ($P_0$ and $P_1$).

FIG. 11 illustrates a second variant embodiment of a generic method for deriving a parametric function from the prediction samples used in a "geo-blend" mode. In the second variant embodiment, the prediction target $P_T$ is not $P_0$ or $P_1$ but the prediction target $P_T$ is determined as a function g() of both predictions P0 and P1 (1120). For example, the prediction target $P_T$ may be determined as follows:

$$P_T(x,y) = g\big(P_0(x,y), P_1(x,y)\big) = \begin{cases} \dfrac{P_0(x,y)+P_1(x,y)}{2}, & if \ |P_0(x,y) - P_1(x,y)| < \varepsilon \\ V_1, & else \end{cases} \qquad (8)$$

with $V_1$ equal to $P_0$(x,y) or $P_1$(x,y) for example.

Then, in a step 1150, the parameters value PAR are derived in a step 1150 using regression based process similarly as in previous embodiment according to equation (9):

$$\text{PAR} = \arg \min_{(x,y)\epsilon B} \left( P_T(x,y) - P_{bi-pred}(x,y) \right)^2 \qquad (9)$$

Where $P_{bi-pred}$ (x, y) is computed according to equation (5) (1150).

Once the parameters PAR have been derived, the weighting map is computed with PAR according to equation (1) in a step 1160 and the regular weighted bi-prediction $P_{bi\text{-}pred}(x,y)$ is computed according to equation (5) and used to reconstruct the block as usual.

According to a particular variant, g() is a function which uses a level $\varepsilon$ which is a portion of standard deviation as a threshold to select the target prediction as being a combination of $P_0$ and $P_1$ or only one of the $P_0$ and $P_1$. However, the level $\varepsilon$ may be derived from the various signal characteristics of $P_0$ or $P_1$, such as a pre-determined value, the standard deviation, the min/max range of the prediction(s) sample values according to non-limiting examples.

**A third variant embodiment for deriving a parametric function using a target weighting function as a function of the first and second prediction ($P_0$ and $P_1$).**

FIG. 12 illustrates a third variant embodiment of a generic method for deriving a parametric function from the prediction samples used in a "geo-blend" mode. In the third variant embodiment, in a first stage, a target weighting map $w_T(x,y)$ which is the weight applied on P1 (while $1 - w_T(x,y)$ is the weight applied on P0) is derived (1240) from the predictions P0 and P1. For example:

$$w_T(x,y) = \begin{cases} V_0, & if\ |P_0(x,y) - P_1(x,y)| < \varepsilon \\ V_1, & else \end{cases} \qquad (10)$$

With $(V_0,V_1)$ equal to (0,1), (1/2 ,1), (0,1/2), (1,0), (1,1/2), (1/2,0) for example.

Next, the parameters PAR are derived using regression process (1240) using $w_T(x,y)$ as target. For example:

$$PAR = \arg\min_{(x,y)\epsilon B} |w(x,y) - w_T(x,y)| \qquad (11)$$

or

$$PAR = \arg\min_{(x,y)\epsilon B} \big(w(x,y) - w_T(x,y)\big)^2 \qquad (12)$$

The value of $\varepsilon$ may be derived from the signal characteristics of $P_0$ and/or $P_1$, such as the standard deviation, the min/max range sample values according to non-limiting examples.

In a variant, one weight target index 'wIdx' may be signaled in the bitstream (1230) for the current block. If wIdx=0, then the target weight V1 is superior to target weight V0. For example $(V_0,V_1)$ is equal to (0,1), (1/2,1), (0, 1/2). And if wIdx=1, then V1 is inferior to V0. For example $(V_0,V_1)$ is equal to (1,0), (1, 1/2 ), (1/2 ,0).

Once the parameters PAR have been derived, the weighting map is computed with PAR (1) (1260) and the regular weighted bi-prediction (5) is computed $P_{bi\text{-}pred}(x,y)$ and used to reconstruct the block as usual.

**A fourth variant embodiment for deriving a parametric function with an extension of the parametric function to higher linear order**

The spatially varying parametric bi-prediction weight function w(x,y) may be more complex than (1) where the PAR are estimated from the template TM, because the block area is generally larger than the template size. Although this variant is introduced in the scope of geo-blending based on prediction, the below weight functions are also compatible with the template-based regression model. In a variant, the use of different weighting function models may be selected implicitly from coding parameters (ex: the block size) or signaled in the bitstream.

In the previous embodiments, the weight function model may be linear with higher degree than affine linear. In a variant, he blending parametric function is a polynomial of variables (x,y) position of samples in the block and may include cross variable (x,y) polynomial terms. For example, it can be bi-linear and/or quadratic:

$$w(x,y) = a_0.x + a_1.x^2 + a_2.y + a_3.y^2 + b$$

$$w(x,y) = a_0.x + a_1.y + a_3.x.y + b$$

$$w(x,y) = a_0.x + a_1.x^2 + a_2.y + a_3.y^2 + a_4.x.y + b$$

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various methods and other aspects described in this application can be used to modify modules, for example, the motion compensation module (270) of a video encoder 200 as shown in FIG. 2. Moreover, the present aspects are not limited to ECM and VVC, and can be applied, for example, to other standards and recommendations, and extensions of any such standards and recommendations. Unless indicated otherwise, or technically precluded, the aspects described in this application can be used individually or in combination.

Various numeric values are used in the present application. The specific values are for example purposes and the aspects described are not limited to these specific values.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

Note that the syntax elements as used herein are descriptive terms. As such, they do not preclude the use of other syntax element names.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

We describe a number of embodiments. Features of these embodiments can be provided alone or in any combination, across various claim categories and types. Further, embodiments can include one or more of the following features, devices, or aspects, alone or in any combination, across various claim categories and types.

## Claims

1. A method for video decoding, comprising:

   obtaining a first information indicating a splitting of a block of a picture with a geometric partition that is responsive to a blending parametric function of a sample location in the block;
   obtaining a first prediction of the block;
   obtaining a second prediction of the block;
   deriving (1020, 1120, 1220) parameters of the blending parametric function from samples of at least one of the first prediction or the second prediction;
   obtaining (1060, 1160, 1260) a third prediction of the block as a weighted blending of the first prediction and the second prediction wherein a weight of weighted blending is obtained from the blending parametric function responsive to the derived parameters applied to a sample location in the block; and
   decoding the block based on the third prediction of the block.

2. A method for video encoding, comprising

   obtaining a first information indicating a splitting of a block of a picture with a geometric partition that is responsive to a blending parametric function of a sample location in the block;
   obtaining a first prediction of the block;
   obtaining a second prediction of the block;
   deriving (1020, 1120, 1220) parameters of the blending parametric function from samples of at least one of the first prediction or the second prediction;
   obtaining (1060, 1160, 1260) a third prediction of the block as a weighted blending of the first prediction and the second prediction wherein a weight of weighted blending is obtained from the blending parametric function responsive to the derived parameters applied to a sample location in the block; and
   encoding the block based on the third prediction of the block.

3. The method of any of claims 1 or 2, wherein deriving a plurality of parameters of the blending parametric function from the samples of at least one of the first prediction or the second prediction comprises:

selecting a target prediction among the first prediction or second prediction;

applying a noise function to the first prediction or the second prediction selected as target prediction; and

obtain parameters of the blending parametric function applied to a sample location in the block that minimize a distance between the target prediction and weighted blending of the first prediction and the second prediction in which the noise function is applied to the selected prediction.

4. The method of claim 3, wherein the noise function adds a random noise or a pre-determined pattern signal to samples of the selected prediction.

5. The method of claim 3, wherein an amplitude of the noise function is derived from signal characteristics of at least one of the first prediction or the second prediction among which a standard deviation of sample values of at least one of the first prediction or the second prediction, a minimum or maximum range of sample values of at least one of the first prediction or the second prediction.

6. The method of claim 3, further comprising obtaining a second information indicating a prediction among the first prediction or the second prediction used as the target prediction of the block.

7. The method of any of claims 1 or 2, wherein deriving a plurality of parameters of the blending parametric function from the samples of at least one of the first prediction or the second prediction comprises:

determine a target prediction as a function of the first prediction and the second prediction; and

obtain parameters of the blending parametric function applied to a sample location in the block that minimizes a distance between weighted blending of the first prediction and the second prediction and the target prediction.

8. The method of claim 7, wherein responsive to a distance between a sample value of the first prediction and of the second prediction being below a level, a combination of first prediction and of the second prediction is used as the target prediction, otherwise only one of first prediction and of the second prediction is used as the target prediction.

9. The method of claim 8, wherein the level is derived from signal characteristics of the first prediction or the second prediction among which a standard deviation of sample values of at least one of the first prediction or the second prediction, a minimum or maximum range of sample values of at least one of the first prediction or the second prediction.

10. The method of any of claims 1 or 2, wherein deriving a plurality of parameters of the blending parametric function from the samples of at least one of the first prediction or the second prediction comprises:

determine a target blending function as a function of the first prediction and the second prediction; and

obtain parameters of the blending parametric function applied to a sample location in the block that minimize a distance between the target blending function and the parametric blending function.

11. The method of claim 10, wherein responsive to a distance between a sample value of the first prediction and of the second prediction being below a level, a first value is used as a target blending weight, otherwise a second value is used as a target blending weight.

12. The method of claim 11, wherein the level is derived from signal characteristics of the first prediction or the second prediction among which a standard deviation of sample values of at least one of the first prediction or the second prediction, a minimum or maximum range of sample values of at least one of the first prediction or the second prediction.

13. The method of any of claims 1 to 12, wherein the blending parametric function is a polynomial of variables $(x,y)$ position of samples in the block and includes cross variable $(x,y)$ polynomial terms.

14. An apparatus, comprising one or more processors, wherein the one or more processors are configured to perform the method of any of claims 1-13.

15. A computer readable storage medium having stored thereon instructions for video encoding according to the method of any one of claim 1 and claims 1-13.

FIG. 1

**FIG. 2**

EP 4 618 538 A1

FIG. 3

FIG. 4

FIG. 5

600

List of regular Geo
candidates

Extract the list of candidates with at
least L0 reference: LC0 — 610

Extract the list of candidates with at
least L1 reference: LC1 — 620

$(idx0, idx1) = $ Z-scan LC0, LC1 ( i ) — 630

i ++

Check $(idx0, idx1)$ or
$(idx1, idx0)$ not in LP — 640

no

yes

Add $(idx0, idx1)$ in LP — 650

List of Geo-blend
candidates

**FIG. 6a**

| L0 / L1 | 0 | 2 | 3 | 5 | 6 |
|---------|---|---|---|---|---|
| 1 |   |   |   |   |   |
| 4 |   |   |   |   |   |
| 7 |   |   |   |   |   |

660

| L0 / L1 | 0 | 1 | 2 |
|---------|---|---|---|
| 0 |   |   |   |
| 2 |   |   |   |

670

**FIG. 6b**                    **FIG. 6c**

EP 4 618 538 A1

700

(710) extended
reference samples
(template)

Reference
block

Reference picture

(720) reconstructed
samples (template)     730

Current
CU

Current picture

FIG. 7

18

800

mergeIdx0 /mergeIdx1
inter-prediction candidates

Build the prediction PT0 with the
motion vectors of mergeIdx0
for the Template T — 810

Build the prediction PT1 with the
motion vectors of mergeIdx1
for the Template T — 820

Reconstructed
Template RT → Derive Blending function W(x,y)
parameters — 830

Is blending function valid ? — 835    no

yes

Builds the template prediction
PT=W.PT0+(1-W).PT1 — 840

Cost = Distortion( RT, PT ) — 850    Cost = MAX — 850

cost

**FIG. 8**

P0

P1

F(P1)

**FIG. 9**

Build the predictions P0 and P1 — 1010

Select the target prediction $P_T=Ps$ — 1030

Modify the prediction f(Ps) — 1040

Derive the weighted function parameters PAR — 1050

Build the weighted bi-prediction with the weighted function applied on P0 and P1 — 1060

**FIG. 10**

Build the predictions P0 and P1 — 1110

1120

Determine the target prediction $P_T$ — 1130

Derive the weighted function parameters PAR — 1150

1100

Build the weighted bi-prediction with the weighted function applied on P0 and P1 — 1160

**FIG. 11**

Build the predictions P0 and P1 — 1210

1220

Select the target weight index 'wIdx' — 1230

Derive the target weighting map $W_T(x,y)$ — 1240

Derive the weighted function parameters PAR — 1250

1200

Build the weighted bi-prediction with the weighted function applied on P0 and P1 — 1260

**FIG. 12**

Europäisches
Patentamt

European
Patent Office

Office européen
des brevets

# EUROPEAN SEARCH REPORT

**Application Number**

EP 24 30 5395

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BORDES (INTERDIGITAL) P ET AL: "Non-EE2: Regression-based GPM blending", 32. JVET MEETING; 20231013 - 20231020; HANNOVER; (THE JOINT VIDEO EXPLORATION TEAM OF ISO/IEC JTC1/SC29/WG11 AND ITU-T SG.16 ), , no. JVET-AF0118 6 October 2023 (2023-10-06), XP030312198, Retrieved from the Internet: URL:https://jvet-experts.org/doc_end_user/documents/32_Hannover/wg11/JVET-AF0118-v1.zip JVET-AF0118-v1.docx [retrieved on 2023-10-06] * abstract * * Sections 1 and 2 * | 1-15 | INV. H04N19/119 H04N19/176 |
| A | COBAN M ET AL: "Algorithm description of Enhanced Compression Model 11 (ECM 11)", 144. MPEG MEETING; 20231016 - 20231020; HANNOVER; (MOTION PICTURE EXPERT GROUP OR ISO/IEC JTC1/SC29/WG11), , no. m65800 ; JVET-AF2025 28 December 2023 (2023-12-28), XP030313758, Retrieved from the Internet: URL:https://dms.mpeg.expert/doc_end_user/documents/144_Hannover/wg11/m65800-JVET-AF2025-v1-JVET-AF2025.zip JVET-AF2025-v1.docx [retrieved on 2023-12-28] * Section 3.2.20; figure 35 * | 1-15 | |

**TECHNICAL FIELDS SEARCHED (IPC)**

H04N

The present search report has been drawn up for all claims

| Place of search | Date of completion of the search | Examiner |
|---|---|---|
| The Hague | 25 August 2024 | Molina Sedgwick, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)